# EUROPEAN PATENT SPECIFICATION

(11) **EP 3 708 879 B1**
(45) Date of publication and mention of the grant of the patent: **05.05.2021**
(21) Application number: 19162254.7
(22) Date of filing: 12.03.2019
(51) Int. Cl.: F16H 63/34

(54) **PARKING LOCK ACTUATOR**
PARKSPERRENAKTUATOR
ACTIONNEUR DE VERROUILLAGE DE STATIONNEMENT

(43) Date of publication of application: 16.09.2020
(73) Proprietor: U-Shin Deutschland Zugangssysteme GmbH, 85253 Erdweg (DE)
(72) Inventor: LINDER, Anton, 85253 Erdweg (DE); KALIEBE, Lukas, 85253 Erdweg (DE); KUMMER, Frank, 85253 Erdweg (DE)
(74) Representative: Prinz & Partner mbB

(56) References cited:
- WO-A2-02/36994
- DE-A1- 10 045 953
- DE-A1- 10 316 949

## Description

The invention relates to a parking lock actuator according to the preamble of claim 1.

Usually, a parking lock actuator is part of a parking lock assembly in a vehicle, in particular in a vehicle having an automated gear transmission, but also in an electrically driven vehicle.

The parking lock assembly mechanically locks part of the transmission so as to keep the vehicle stationary when parked. In particular, the parking lock is intended to prevent the vehicle from unintentionally moving, in particular when parked on an inclined surface.

Mechanical parking lock assemblies are known that include a parking lock gear and a blocking pawl able to block the parking lock gear. An electro-mechanical actuator provides a torque that is transferred to the blocking pawl to move the blocking pawl to block or release the parking lock gear.

The parking lock actuator must provide on one hand a high torque (up to 10Nm) over a very short time (<500ms) in an active mode during the blocking or releasing motion, and must on the other hand in a passive mode support a constant high loading torque arising from the transmission and/or the gear box over a long time period while the vehicle is parked.

Generic WO 02/36994 A2 shows an operating device in an automated gear transmission that is also adapted to bring the transmission into a parking position. A spindle drive has a nut that is connected to a sledge that in turn is coupled to a pivoting lever that rotates a drive shaft connected to the automated gear transmission. A spring element is provided that acts on the sledge in a closing direction towards the parking position.

DE 103 16 949 A1 shows a parking lock and actuator with a self-locking spindle drive comprising a nut connected with a knee lever that is coupled with a pivoting locking element that engages a gear to close the parking lock. The gear is arranged on a driven shaft. Further, a return spring is arranged on the locking element that prevents an inadvertent closing of the parking lock.

It is an object of the invention to provide a robust parking lock actuator that provides high release forces without requiring excessive actuation power, and is compact.

This object is achieved with a parking lock actuator with the features of claim 1. The lever is pivotally fixed at a pivot axis so that the lever is pivoted when the nut is linearly translated. The pivoting motion of the lever can easily be transferred into a rotational motion of the output element. The pivot axis is for instance arranged on the far side of the output element from the nut. The lever has only one degree of freedom, namely in a pivot plane perpendicular to the extension of the output element.

In contrast to concepts based on classical gearing system types like spur gears or worm gears, spindle drives can support high loads without deformation, wear and creeping phenomena, keeping up a high accuracy and self-blocking performance over the lifetime of the vehicle. A further advantage of a spindle drive is that it produces very little noise.

The output element is adapted for being connected to a rotatable component of the actual parking lock such as an output shaft connected to a locking pawl that interacts with a parking lock gear.

The connection between the output element and e.g. the output shaft preferably is a formfitting connection, for instance by providing a hexagon socket on the output element or the output shaft.

Generally, the load conditions are asymmetrical during closing and opening of the parking lock. A high external load might act on the output element so that the actuator has to provide a high force or torque when being operated in a release direction for rotating the output element into its release position, whereas the load is very low when the output element is rotated into its locking position by operating the actuator in a locking direction.

According to the present invention, a spring element is provided that acts on the lever, supporting the nut in providing part of the torque required for rotating the output element in the release direction.

The spring element is arranged so as to bias the lever in a lever release direction. In this way, the spring element aids the spindle drive to rotate the output element into its release position under external high loads by providing part of the torque necessary to rotate the output element. When the lever is actuated in a lever locking direction, the spring is tensioned again which however is no problem as no load acts on the output element in this condition. In other words, the spring is used to "store" part of the energy to move the output element towards the release position, this energy being transmitted to the spring in a mode of operation when there are low external loads acting on the output element. Because of the more symmetrically distributed loads in the locking and unlocking operation, the parking lock actuator can be built more compact. This is a further advantage over conventional parking lock actuators with an asymmetrical performance behavior in the locking and the release direction, which require over-sizing of the gearing kinematics to reach the necessary high performance in the release direction. Further, the spring element preferably also compensates clearances in the lever mechanism and improves an accuracy of the position of the output element.

The spring element may be a pressure spring or tension spring, depending on the actual design of the parking lock actuator.

As already indicated above, the spindle drive should be self-locking. This is easily achievable by choosing a suitable geometry of a connection between the spindle and the nut, e.g. by choosing a suitable type and pitch of the thread.

The torque-transmitting connection between the lever and the output element may be realized by attaching the output element eccentrically to the lever so that the output element is rotated by a pivoting motion of the lever.

In this case, the lever should be connected linearly displaceably to the output element to allow for a relative displacement between the lever and the output element during the pivoting of the lever and the rotation of the output element. In a preferred embodiment, a first structure is provided on the output element and a second structure is provided on the lever that engages the first structure. The first and second structures form at the same time the torque-transmitting connection. The first structure may be e.g. a pin on a radial protrusion extending from the output element. The second structure may be realized e.g. as a groove, a slot or a long hole in the lever, perpendicular to the extension of the output element. It should be understood that the structures might also be exchanged between the lever and the output element. Of course, any other suitably type of connection is also possible, for instance one including gears.

Also, the lever should be pivotably connected to the nut to be able to compensate the linear motion of the nut. For instance, a pin can be provided on the nut that engages a recess on the lever (or vice versa).

Optionally, the lever is connected to the nut by a connecting portion that is symmetrical with regard to a plane perpendicular to the extension of the output element, the connecting portion being attached to the nut on opposite sides of the nut to achieve a more stable connection and to avoid twisting or tilting of the nut under high load. This plane can correspond to the pivot plane of the lever.

Preferably, the parking lock actuator has a housing, and the nut is slidingly accommodated in a guide structure in the housing, the walls of the guide structure keeping the nut from rotating. Providing the guide for the nut directly in the housing also leads to a more compact design of the parking lock actuator.

For a better control of the parking lock and the parking lock actuator, a sensor system may be provided that is designed to detect a rotational position of the output element. The sensor system may relate the position of the output element e.g. to a control unit of a vehicle control system. The position of the output element can be detected as an absolute or incremental position. Of course, the sensor(s) of the sensor system can be of any suitable type, for instance optical sensors or hall sensors. It is possible to detect an actual position of the output element along the complete rotation path of the output element or to restrict the detection of position to the two end positions of the rotation of the output element determined by the locking and the release position.

The invention will be described in the following based on a preferred embodiment and with regard to the enclosed figures. In these,
- Figure 1 shows a schematic perspective view of an parking lock actuator according to the invention;
- Figure 2 shows a perspective views of the components of the parking lock actuator of figure 1, and
- Figure 3 shows the components shown in Figure 2 in a different perspective view.

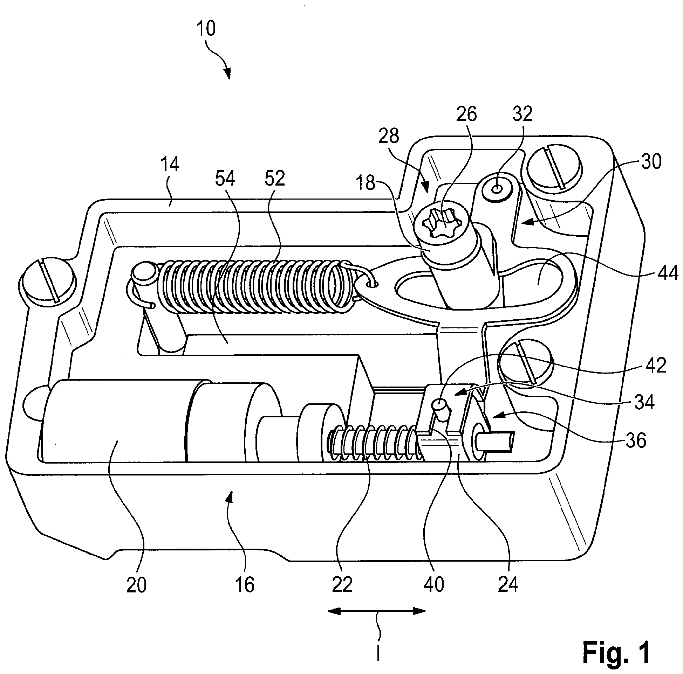

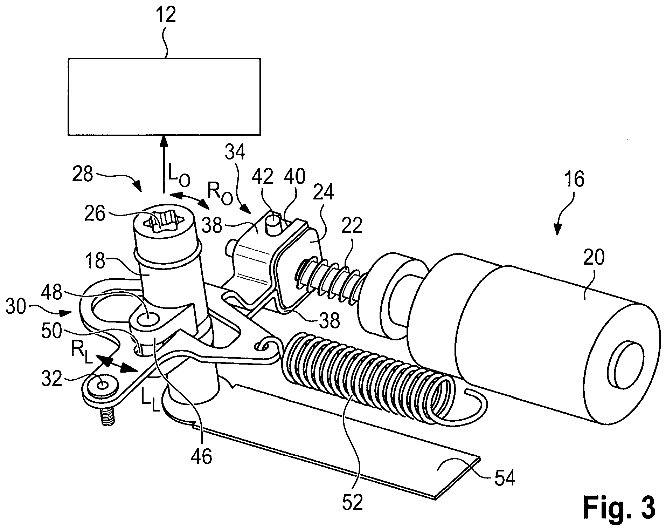

Figure 1 shows a parking lock actuator 10 for connection with a locking system of a parking lock assembly 12 (schematically indicated in Figure 3).

The parking lock actuator 10 comprises a housing 14 in which a spindle drive 16 and an output element 18 are arranged. The output element 18 is connected to the spindle drive 16 in a torque-transmitting manner. At one end, the output element 18 is fixedly but rotatably accommodated in the housing 14 so that the output element 18 can rotate between a locking position and a release position in a release direction Ro and a locking direction Lo which is opposite the release direction.

The spindle drive 16 comprises an electric motor 20, a spindle 22 connected rotatably to the electric motor 20 and a nut 24 arranged so on the spindle 22 that the nut 24 is linearly translated along the spindle 22 without rotating when the electric motor 20 is activated. The nut 24 can move in both directions along an extension I of the spindle 22.

A guide structure for the nut 24 is provided in the housing 14 and may be formed directly from the material of the housing 14.

The output element 18 extends in a direction perpendicular to the spindle 22.

The connection between the parking lock actuator 10 and the locking system of the parking lock assembly 12 is realized by means of the output element 18. For this purpose, an interaction structure 26 for a form-fitting and torque-transmitting connection is provided on the output element 18. The interaction structure 26 is e.g. a hexagon socket on a free end 28 of the output element 18.

The output element 18 is coupled by the interaction structure 26 for instance with a locking pawl that, in turn, interacts with a parking lock gear. In the locking position of the output element 18, the parking lock is closed, while in the release position of the output element 18, the parking lock is open (not shown).

Nut 24 and output element 18 are connected by a lever 30. The lever 30 is attached to the housing 14 with a first end at a pivot axis 32 so that it can pivot in a pivot plane perpendicular to the extension of the output element 18 about the pivot axis 32. At its second end 34 opposite the pivot axis 32, the lever 30 is pivotably connected to the nut 24 by a connecting portion 36 so that the lever 30 is pivoted about its pivot axis 32 in a lever locking direction L_{L} and a lever release direction R_{L} when the nut 24 is translated along the spindle 22, the release direction being opposite to the locking direction.

In this example, the connecting portion 36 comprises two arms 38 extending above and below the nut 24 with regard to the pivot plane of the lever 30 and is formed symmetrically with regard to the pivot plane. On each of the arms 38, a recess 40 is provided that is engaged by a pin 42 on the nut 24 to allow pivoting and sliding of the second end 34 of the lever 30 with respect to the nut 24, when the nut 24 is translated along the spindle 22.

Between its second end 34 and its first end attached at the pivot axis 32, the lever 30 comprises an opening 44 through which the output element 18 extends, so that the output element 18 is placed in a direct line between the pivot axis 32 and the connection of the lever 30 with the nut 24. The dimensions of the opening 44 are chosen such that the pivoting motion of the lever 30 is not impeded by contact with the output element 18.

The output element 18 is eccentrically connected to the lever 30 in a manner that the pivoting motion of the lever 30 is translated into a rotational motion of the output element 18. In this example, the output element 18 has a first structure in form of a radial protrusion 46 ending in an output element pin 48 that extends parallel to the extension of the output element 18 and that engages in a second structure in form of a groove 50 manufactured in the lever 30 near the inner edge of the opening 44 adjacent to the pivot axis 32 (see Figure 3). During the pivoting motion of the lever 30, the output element pin 48 slides in the groove 50 to allow for a relative motion between the radial protrusion 46 and the lever 30, while at the same time, torque is transmitted from the lever 30 to the output element 18 and the output element 18 is rotated about its longitudinal extension.

The lever 30 is further connected to a spring element 52 that is attached to the housing 14. In this example, the spring element 52 is a helical spring designed as a tension spring. One end of the spring element 52 is fixedly attached to the housing 14. The other end of the spring element 52 is fixedly attached to the lever 30 adjacent to the opening 44 on the side of the lever 30 facing in lever release direction R_{L}.

A sensor system 54 is arranged in the housing 14 that is designed to detect an actual rotational position of the output element 18 and at least is able to determine when the output element 18 has reached its locking position and it is a release position. For example, the sensor system 54 detects the rotational position of the output element 18 itself or detects a pivot position of the lever 30. The sensor system 54 is able to communicate with an external control unit (not shown).

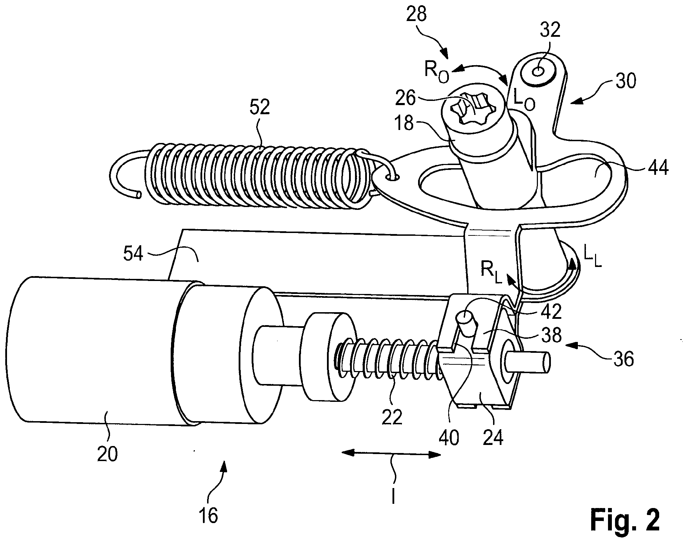

To close the parking lock, the parking lock actuator 10 is activated and the spindle 22 is rotated by the electric motor 20 so that the nut 24 translates away from the electric motor 20 in this example and the lever 30 is pivoted in lever locking direction L_{L} towards the right in Figures 1 and 2. The lever 30 works against the spring element 52 and tensions the spring element 52. By the interaction between the groove 50 and the output element pin 48 on the radial protrusion 46 of the output element 18, the output element 18 is rotated along its longitudinal axis in its locking direction Lₒ until the output element 18 reaches its locking position. Consequently, the locking system of the parking lock assembly 12 is activated and the parking lock is closed. Due to the eccentric coupling between the lever 30 and the output element 18 in this example, the locking direction Lo of the output element 18 is opposite to the lever locking direction L_{L}.

The spindle drive 16 is self-locking, so that the parking lock actuator 10 may be deactivated when the output element 18 has reached its locked position, as long as the parking lock is to stay closed.

To open the parking lock, the parking lock actuator 10 is activated again. This time, the electric motor 20 rotates in reverse or opposite direction so that the nut 24 is translated towards the electric motor 20 in this example and the lever 30 is pivoted in lever release direction R_{L} to the left in Figure 1. Consequently, the output element 18 is rotated in release direction Ro (opposite to the lever release direction R_{L}). The spring element 52 supports rotation of the lever 30 in its release direction R_{L} so that a high torque is transmitted to the output element 18 and, therefore, to the parking lock assembly 12. The locking system of the parking lock assembly 12 can thus be opened even if a high load acts thereon.

After the output element 18 has reached its release position, the parking lock actuator 10 is deactivated again.

## Claims

1. A parking lock actuator (10) comprising an output element (18) that is adapted for being connected to a rotatable component of a parking lock, the output element (18) being rotatably mounted so as to be rotatable between a locking position and a release position, a spindle drive (16) that includes an electric motor (20), a spindle (22) rotatably connected with the electric motor (20) and a nut (24) non-rotatably accommodated on the spindle (22), and a lever (30) for converting a translational movement of the nut (24) into a rotation of the output element (18), the nut (24) being connected to the lever (30) and the lever (30) being connected to the output element (18) in a torque-transmitting manner, the lever (30) being pivotally fixed at a pivot axis and having only one degree of freedom in a pivot plane perpendicular to an extension of the output element (18), wherein a spring element (52) is provided, **characterized in that** the spring element (52) acts on the lever (30) and biases the lever (30) in a lever release direction (R_{L}) towards the release position of the output element (18), supporting the nut (24) in providing part of the torque required for rotating the output element (18) in a release direction.

2. The parking lock actuator (10) according to claim 1 wherein the spindle drive (16) is self-locking.

3. The parking lock actuator (10) according to any of the preceding claims wherein the pivot axis (32) is arranged on a far side of the output element (18) from the nut (24).

4. The parking lock actuator (10) according to any of the preceding claims wherein the lever (30) is connected linearly displaceably to the output element (18).

5. The parking lock actuator (10) according to any of the preceding claims wherein the lever (30) is pivotably connected to the nut (24).

6. The parking lock actuator (10) according to any of the preceding claims wherein the lever (30) is connected to the nut (24) by a connecting portion (36) that is symmetrical with regard to a plane perpendicular to the extension of the output element (18).

7. The parking lock actuator (10) according to any of the preceding claims wherein a housing (14) is provided and the nut (24) is slidingly accommodated in a guide structure in the housing (14).

8. The parking lock actuator (10) according to any of the preceding claims wherein a sensor system (54) is provided that is designed to detect a rotational position of the output element (18).

## Patentansprüche

1. Parksperrenaktuator (10) mit einem Abtriebselement (18), das dazu eingerichtet ist, mit einem drehbaren Bauteil einer Parksperre verbunden zu werden, wobei das Abtriebselement (18) drehbar gelagert ist, derart, dass es zwischen einer Sperrstellung und einer Lösestellung drehbar ist, einem Spindelantrieb (16), der einen Elektromotor (20), eine mit dem Elektromotor (20) drehbar verbundene Spindel (22) und eine drehfest auf der Spindel (22) aufgenommene Mutter (24) aufweist, und einem Hebel (30) zur Umwandlung einer translatorischen Bewegung der Mutter (24) in eine Drehung des Abtriebselements (18), wobei die Mutter (24) mit dem Hebel (30) verbunden ist und der Hebel (30) mit dem Abtriebselement (18) drehmomentübertragend verbunden ist, wobei der Hebel (30) an einer Schwenkachse schwenkbar befestigt ist und nur einen Freiheitsgrad in einer Schwenkebene senkrecht zu einer Erstreckung des Abtriebselements (18) hat, wobei ein Federelement (52) vorgesehen ist, **dadurch gekennzeichnet, dass** das Federelement (52) auf den Hebel (30) wirkt und den Hebel (30) in einer Hebellöserichtung (R_{L}) in Richtung auf die Lösestellung des Abtriebselements (18) beaufschlagt, wobei es die Mutter (24) bei der Bereitstellung eines Teils des zur Drehung des Abtriebselements (18) in einer Löserichtung erforderlichen Drehmoments unterstützt.

2. Parksperrenaktuator (10) nach Anspruch 1, wobei der Spindelantrieb (16) selbstsperrend ist.

3. Parksperrenaktuator (10) nach einem der vorhergehenden Ansprüche, wobei die Schwenkachse (32) auf einer von der Mutter (24) abgewandten Seite des Abtriebselements (18) angeordnet ist.

4. Parksperrenaktuator (10) nach einem der vorhergehenden Ansprüche, wobei der Hebel (30) linear verschiebbar mit dem Abtriebselement (18) verbunden ist.

5. Parksperrenaktuator (10) nach einem der vorhergehenden Ansprüche, wobei der Hebel (30) schwenkbar mit der Mutter (24) verbunden ist.

6. Parksperrenaktuator (10) nach einem der vorhergehenden Ansprüche, wobei der Hebel (30) über einen Verbindungsabschnitt (36), der bezüglich einer zur Erstreckung des Abtriebselements (18) senkrechten Ebene symmetrisch ist, mit der Mutter (24) verbunden ist.

7. Parksperrenaktuator (10) nach einem der vorhergehenden Ansprüche, wobei ein Gehäuse (14) vorgesehen ist und die Mutter (24) gleitend in einer Führungsstruktur im Gehäuse (14) aufgenommen ist.

8. Parksperrenaktuator (10) nach einem der vorhergehenden Ansprüche, wobei eine Sensorik (54) vorgesehen ist, die so ausgelegt ist, dass sie eine Drehstellung des Abtriebselements (18) erfasst.

## Revendications

1. Actionneur de verrouillage de stationnement (10), comprenant un élément de sortie (18) qui est apte à être relié à un composant mobile en rotation d'un verrouillage de stationnement, l'élément de sortie (18) étant agencé mobile en rotation de manière à être mobile en rotation entre une position de verrouillage et une position de déblocage, un entraînement de broche (16) qui présente un moteur électrique (20), une broche (22) qui est reliée de manière mobile en rotation au moteur électrique (20) et un écrou (24) logé de manière non mobile en rotation sur la broche (22), et un levier (30) pour convertir un mouvement de translation de l'écrou (24) en une rotation de l'élément de sortie (18), l'écrou (24) étant relié au levier (30), et le levier (30) étant relié à l'élément de sortie (18) de manière à transmettre un couple, le levier (30) étant fixé à pivotement sur un axe de pivotement et présentant uniquement un degré de liberté dans un plan de pivotement perpendiculaire à une extension de l'élément de sortie (18), un élément ressort (52) étant prévu, **caractérisé en ce que** l'élément ressort (52) agit sur le levier (30) et précontraint le levier (30) dans un sens de déblocage de levier (R_{L}) en direction de la position de déblocage de l'élément de sortie (18), supportant l'écrou (24) en fournissant une partie du couple requis pour la rotation de l'élément de sortie (18) dans un sens de déblocage.

2. Actionneur de verrouillage de stationnement (10) selon la revendication 1, dans lequel l'entraînement de broche (16) est auto-verrouillant.

3. Actionneur de verrouillage de stationnement (10) selon l'une des revendications précédentes, dans lequel l'axe de pivotement (32) est agencé d'un côté éloigné de l'élément de sortie (18) par rapport à l'écrou (24).

4. Actionneur de verrouillage de stationnement (10) selon l'une des revendications précédentes, dans lequel le levier (30) est relié de manière linéairement déplaçable par rapport à l'élément de sortie (18).

5. Actionneur de verrouillage de stationnement (10) selon l'une des revendications précédentes, dans lequel le levier (30) est relié de manière pivotante à l'écrou (24).

6. Actionneur de verrouillage de stationnement (10) selon l'une des revendications précédentes, dans lequel le levier (30) est relié à l'écrou (24) par un tronçon de liaison (36) qui est symétrique par rapport à un plan perpendiculaire à l'extension de l'élément de sortie (18).

7. Actionneur de verrouillage de stationnement (10) selon l'une des revendications précédentes, dans lequel il est prévu un boîtier (14) et l'écrou (24) est logé de manière coulissante dans une structure de guidage dans le boîtier (14).

8. Actionneur de verrouillage de stationnement (10) selon l'une des revendications précédentes, dans lequel il est prévu un système capteur (54) réalisé pour la détection d'une position de rotation de l'élément de sortie (18).
